# EUROPEAN PATENT SPECIFICATION

(11) **EP 2 871 120 B1**
(45) Date of publication and mention of the grant of the patent: **26.05.2021**
(21) Application number: 14188879.2
(22) Date of filing: 14.10.2014
(51) Int. Cl.: B62J 17/00, B62J 17/02, B62J 25/00, B62K 19/46

(54) **Saddle-type vehicle**
Sattelfahrzeug
Véhicule du type à selle

(30) Priority: 07.11.2013 JP 2013231425
(43) Date of publication of application: 13.05.2015
(73) Proprietor: Yamaha Hatsudoki Kabushiki Kaisha, Shizuoka-ken Shizuoka 438-8501 (JP)
(72) Inventor: Rueangrit, Kengkla, 10540 Samutprakarn (TH)
(74) Representative: Moreland, David

(56) References cited:
- JP-A- H01 275 281
- JP-A- 2010 083 197

## Description

### FIELD OF INVENTION

The present invention relates to a saddle-type or straddle-type vehicle such as a motorcycle.

### BACKGROUND TO INVENTION

Conventionally, a saddle-type or straddle-type vehicle including an accommodation box that is capable of accommodating a helmet or the like is known. WO2004/031026 (HONDA MOTOR CO LTD) describes a motorcycle including an accommodation box located to the rear of a head pipe and to the front of a seat. JP2010-83197 describes a motorcycles including accommodation spaces located to the rear of a head pipe and to the front of a seat.

The motorcycle described in WO2004/031026 has an opening formed in each of a left portion and a right portion of the accommodation box so that an item can be put into, and taken out from, the accommodation box from the sides thereof. A left door is provided to the left of the left opening, and a right door is provided to the right of the right opening. The left door and the right door are openable/closable.

The motorcycle described in JP2010-83197 (HONDA MOTOR CO LTD) has several accommodation spaces located in each of the left and right sides of the vehicle. Openings are formed in each of a left portion and right portion of the accommodation spaces permitting items to be put into, and taken out of, the accommodation spaces. A left cover is provided to cover the openings to the accommodation spaces located on the left of the vehicle. A right cover is provided to cover the openings to the accommodation spaces located on the right of the vehicle. The covers may be detached from the vehicle.

While riding a saddle-type vehicle, a rider often holds a portion to the front of the seat between his/her left and right legs. Called "knee grip", this is one of basic postures of riding a saddle-type vehicle and influences the comfort of riding.

In the above-described prior art motorcycle, the left door is located to the left of the accommodation box, and the right door is located to the right of the accommodation box. When the size of the accommodation box in a widthwise or left-right direction is enlarged in order to more surely provide a sufficiently large accommodation space, the left door is located further left and the right door is located further right. In such a structure, the width of the portion of the motorcycle that is to the front of the seat is larger than the width of the seat. When the width of the portion to the front of the seat is large, it is difficult for the rider to hold this portion between his/her left and right legs, namely, to assume the knee grip posture. This spoils the comfort of riding.

At least one embodiment of the present invention made in light of the above-described problem has an object of providing a saddle-type vehicle including an accommodation box located between a head pipe and a seat and an openable/closable cover located to a side of the accommodation box, the saddle-type vehicle more surely providing a sufficiently large accommodation space and also improving the comfort of riding.

### SUMMARY OF INVENTION

An aspect of the present invention is defined in the independent claim 1.

Some preferred features are defined in the dependent claims.

A saddle-type or straddle-type vehicle according to a first aspect of the present invention comprises:
a head pipe;
a vehicle body frame extending rearward from the head pipe;
a seat for seating a rider, the seat being supported by the vehicle body frame at a position to the rear of the head pipe;
an accommodation box located to the rear of the head pipe and to the front of the seat, the accommodation box comprising a first opening formed in at least one of a left portion and a right portion thereof; and
an openable/closable first side cover located outwardly of the first opening of the accommodation box in a vehicle width direction;
wherein the first side cover includes an opening overlapping the first opening of the accommodation box as seen in a vehicle side view when the first side cover is closed, wherein:
   the accommodation box includes a second opening formed in the left portion or the right portion thereof that is opposite to the portion in which the first opening is formed;
   the saddle-type vehicle further includes a second side cover located outwardly in the vehicle width direction to the second opening of the accommodation box; and
   the second side cover includes an opening overlapping the second opening of the accommodation box as seen in the vehicle side view when the second side cover is closed, and wherein
the opening of the first side cover, the first opening of the accommodation box, the second opening of the accommodation box and the opening of the second side cover overlap each other as seen in the vehicle side view, so that a hole running through the first side cover, the accommodation box and the second side cover is formed in the vehicle.

According to the above-described vehicle, an item may be put into, or taken out from, the accommodation box by opening the first side cover. The first side cover includes an opening formed therein. Therefore, the rider may put at least part of one of his/her legs along and/or in the opening in the first side cover and thus may put the one leg into close contact with the first side cover without opening their legs wide. This may allow the rider to assume the knee grip posture easily while a sufficiently large accommodation space in the vehicle width, e.g. left-right, direction is provided. Therefore, the above-described vehicle may provide a sufficiently large accommodation space with certainty and may also improve the comfort of riding.

According to an embodiment of the present invention, the vehicle may further include a steering shaft inserted into the head pipe; a front fork coupled to the steering shaft; and a front wheel supported by the front fork. A bottom end of the opening of the first side cover may be located above a top end of the front wheel.

According to the above-described embodiment, the rider may easily put one of his/her legs into close contact with a portion of the first side cover that is below the opening. This may allow the rider to assume the knee grip posture easily. Therefore, a sufficiently large accommodation space may be provided with high certainty and also the comfort of riding may be highly improved.

According to another embodiment of the present invention, the vehicle may further include a footrest, which may be located below the accommodation box and may be supported by the vehicle body frame. The footrest may be located to the rear of a front end of the opening of the first side cover and may be located to the front of a rear end of the opening of the first side cover.

According to the above-described embodiment, the rider may easily put one of his/her legs along the opening easily. Therefore, a sufficiently large accommodation space may be provided with high certainty and also the comfort of riding may be highly improved.

According to another embodiment of the present invention, a size in a vehicle front-rear direction of the opening of the first side cover may be larger than a size in a vehicle up-down direction of the opening of the first side cover.

According to the above-described embodiment, the rider may easily put at least part of one of his/her legs along and/or in the opening easily. Therefore, a sufficiently large accommodation space may be provided with high certainty and also the comfort of riding may be highly improved.

According to the present invention, the second side cover has the opening formed therein. Therefore, the rider may put at least part of the other of his/her legs along and/or in the opening and thus may put the other leg into close contact with the second side cover. This may allow the rider to assume the knee grip posture easily. Therefore, a sufficiently large accommodation space may be provided with high certainty and also the comfort of riding may be highly improved.

The opening of the first side cover and the opening of the second side cover may be located at matching positions. This may allow the rider to assume the knee grip posture easily. Therefore, a sufficiently large accommodation space may be provided with high certainty and also the comfort of riding may be highly improved.

The present invention may provide a saddle-type or straddle-type vehicle including an accommodation box located between a head pipe and a seat and an openable/closable cover located to a side of the accommodation box. The vehicle may provide a sufficient large accommodation space with certainty and also improving the comfort of riding.

According to another embodiment there is provided a side cover for a saddle-type or straddle-type vehicle according to the first aspect of the present invention.

The side cover may be comprised in and/or fitted or fittable to the saddle-type or straddle-type vehicle. The side cover may be or comprise a retro fitted or fittable side cover.

The side cover may be an openable/closable side cover. The side cover may be configured to be located outwardly of an opening of an accommodation box of the vehicle in a vehicle-width direction. The side cover may include an opening that is configured to overlap a first opening of the accommodation box as seen in a vehicle side view, e.g. at least when the side cover is closed or in a closed configuration.

The side cover may be, comprise and/or be equivalent to the first and/or second side cover described above in relation to the first aspect. The side cover may comprise at least one feature of the first and/or second side cover described above or below in relation to the first aspect.

The vehicle according to the first aspect and/or the side cover according to the second aspect may comprise one or more of the following features.

The side cover, e.g. the first and/or second side cover, may comprise at least a first cover part and a second cover part. The first cover part and the second cover part may be separate from each other or may be integral with each other.

The first cover part may be generally or substantially V-shaped. The first cover part may include a front portion, a top portion and a bottom portion. The top portion may extend obliquely in a rearward and upward direction from the front portion. The bottom portion may extend obliquely in a rearward and downward direction from the front portion. The second cover part may be located or locatable between the top portion and the bottom portion of the first cover part. The opening of the side cover may be formed in the second cover part. The opening may extend between the first cover part and the second cover part.

The opening of the side cover may be smaller than the corresponding opening (e.g. the first and/or second opening) of the accommodation box. The corresponding opening of the accommodation box may be entirely exposed outside when the side cover is open or in an open configuration. A portion of the opening (e.g. the first and/or second opening) of the accommodation box may be at least partially covered with the corresponding side cover when the corresponding side cover is closed or in a closed configuration. However, the portion of the opening of the accommodation box that overlaps the opening in the corresponding side cover may be kept exposed outside even in the state when the corresponding side cover is closed or in the closed configuration. The accommodation space may be in communication with the outside of the accommodation unit via the opening in the side cover when the side cover is closed or in the closed configuration.

The side cover may be larger than the accommodation box. A front end of the side cover may be located or locatable to the front of a front end of the accommodation box. A rear end of the side cover may be located or locatable to a rear of a rear end of the accommodation box.

The opening in the side cover may be formed to be convexed forwardly and/or rearwardly when seen in the vehicle side view. For example, the opening in the side cover may be arranged such that it reduces in size in a vehicle up-down direction as the opening in the side cover extends forwardly and/or rearwardly of a portion of the opening in the side cover that has the largest size in the vehicle up-down direction. The portion of the opening in the side cover that has a largest size in a vehicle up-down direction may be located to the rear of the center position of the opening in the side cover in the vehicle front-rear direction.

The side cover may be hingably and/or pivotably mounted or mountable. The side cover and/or vehicle may comprise a mechanism that opens or closes the side cover, which may comprise a hinge mechanism. The side cover may be openable/closable and/or switchable between the open and closed configurations by pivoting the side cover and/or moving the side cover around the hinge mechanism. The side cover may be fitted or fittable into the accommodation box. The side cover may be separable from the accommodation box.

At least a portion of the accommodation box may be located behind or rearwardly of the head pipe when viewed from the front of the vehicle.

A space below the accommodation box may be covered with an underside cover. A cross frame and/or a center frame may be located below the accommodation box. A space enclosed by a main frame, support frames, the cross frame and/or the center frame of a vehicle body frame may be covered with the underside cover. The space is usable as a space that accommodates parts and components of the vehicle such as a fuel tank or may accommodate another item such as another accommodation box. The fuel tank may be located below the seat.

A bottom end of the opening in the side cover (e.g. the first and/or second side cover) may be located or adapted to be located above a top end of a rear wheel, e.g. in a state where the vehicle is at a stop. A bottom end of the opening in the side cover may be located or adapted to be located above a top end of the power unit, e.g. in the state where the vehicle is at a stop. The opening in the side cover may be located to the rear of a rear end of the front wheel and/or to the front of a front end of the rear wheel. The opening in the side cover may be formed at a position overlapping the seat in the vehicle up-down direction. The opening in the side cover may be located below a top edge of the seat in the vehicle side view.

At least a rear portion of the side cover (e.g. the first and/or second side cover) may be curved toward, e.g. so that at least a rear portion of the side cover becomes closer to, a vehicle center line as it extends rearwardly. An edge of the opening of the side cover may be curved toward, e.g. so as to be closer to, the vehicle center line as it extends rearwardly.

### BRIEF DESCRIPTION OF DRAWINGS

- **Figure 1**: a right side view of a motorcycle;
- **Figure 2**: a right side view of the motorcycle showing a rider with phantom line;
- **Figure 3**: a front view of the motorcycle;
- **Figure 4**: a plan view of the motorcycle;
- **Figure 5**: a plan view of the motorcycle showing the rider's legs with phantom line;
- **Figure 6**: a rear view of an accommodation unit showing a state where a right side cover is closed;
- **Figure 7**: a rear view of the accommodation unit showing a state where the right side cover is opened;
- **Figure 8**: a perspective view of the accommodation unit showing the state where the right side cover is closed;
- **Figure 9**: a perspective view of the accommodation unit showing the state where the right side cover is opened;
- **Figure 10**: a right side view of the accommodation unit showing the state where the right side cover is closed;
- **Figure 11**: a right side view of the accommodation unit showing the state where the right side cover is opened;
- **Figure 12**: a vertical cross-sectional view schematically showing a portion of the motorcycle;
- **Figure 13**: a plan view of the accommodation unit showing the state where the right side cover is closed;
- **Figure 14**: a plan view of the accommodation unit showing the state where the right side cover is opened; and
- **Figure 15**: a cross-sectional view of Figure 12 taken along line XV-XV in Figure 12.

### DESCRIPTION OF EMBODIMENTS

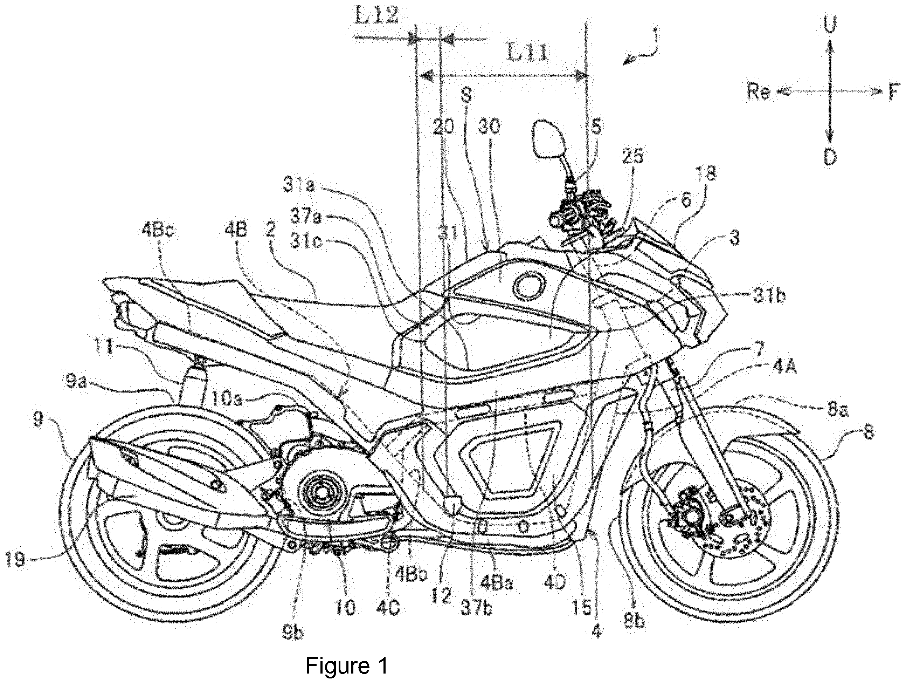

Hereinafter, an embodiment of the present invention will be described with reference to the drawings. As shown in Figure 1, a saddle-type vehicle in this embodiment is a motorcycle 1. The saddle-type vehicle according to the present invention is not limited to a motorcycle. The "saddle-type vehicle" refers to a vehicle which a rider rides astride, also referred to as a straddle-type vehicle. For example, the saddle-type vehicle according to the present invention may be a motor-tricycle, an ATV (All Terrain Vehicle), a scooter, a moped, a snow mobile or the like.

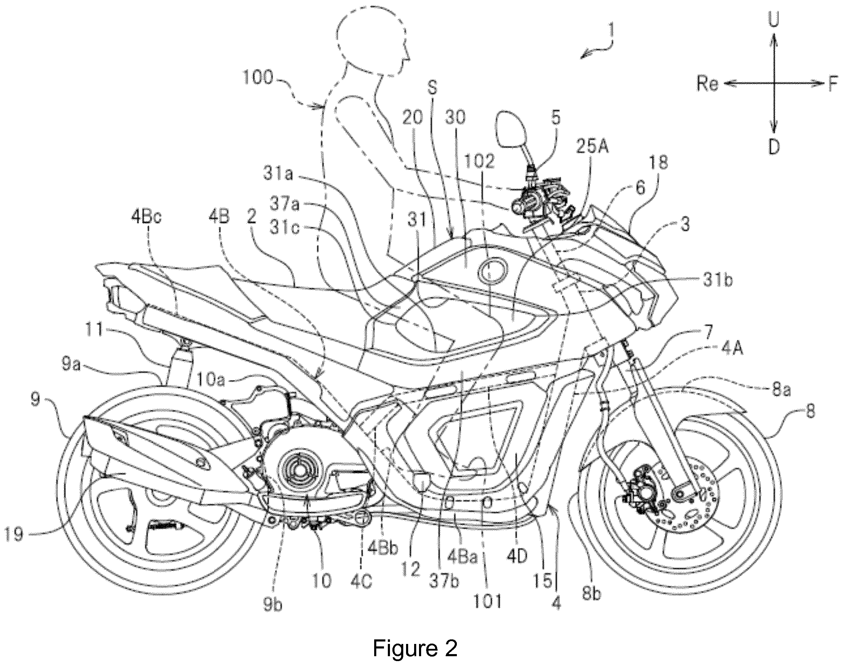

In the following description, unless otherwise specified, the terms "front", "rear", "left", "right", "up" and "down" respectively mean front, rear, left, right, up and down as seen by a rider (see Figure 2) of the motorcycle 1 sitting on a seat 2. In the figures, F, Re, L, R, U and D respectively represent front, rear, left, right, up and down. The terms "up" and "down" respectively correspond to the vertically upward direction and the vertically downward direction when the motorcycle 1 is still on a horizontal surface. Unless otherwise specified, the positional relationship among the elements in the following description is the positional relationship in a state where the motorcycle 1 is at a stop.

As shown in Figure 1, the motorcycle 1 includes a head pipe 3 and a vehicle body frame 4 extending rearward from the head pipe 3. The vehicle body frame 4 includes a main frame 4A extending obliquely in a rearward and downward direction from the head pipe 3, a pair of, namely, left and right, support frames 4B extending rearward from a bottom end portion of the main frame 4A, a cross frame 4C connected to the left support frame 4B and to the right support frame 4B, and a center frame 4D connected to the main frame 4A and to the cross frame 4C.

The support frames 4B each include a bottom frame portion 4Ba connected to the bottom end portion of the main frame 4A, a first inclining frame portion 4Bb extending obliquely in a rearward and upward direction from a rear end of the bottom frame portion 4Ba, and a second inclining frame portion 4Bc extending obliquely in a rearward and upward direction from a rear end of the first inclining frame portion 4Bb. The bottom frame portion 4Ba extends rearward as seen in a vehicle side view. The first inclining frame portion 4Bb is inclined at a larger angle from the horizontal direction than the second inclining frame portion 4Bc. A left end portion of the cross frame 4C is connected to the left first inclining frame portion 4Bb, and a right end portion of the cross frame 4C is connected to the right first inclining frame portion 4Bb. A front end portion of the center frame 4D is connected to the main frame 4A, and a rear end portion of the center frame 4D is connected to a front end portion of the cross frame 4C.

The above-described structure of the vehicle body frame 4 is merely an example, and the structure of the vehicle body frame 4 is not limited to the above. The vehicle body frame 4 may have any other structure.

A steering shaft 6 is rotatably inserted into the head pipe 3. A handle 5 is coupled to a top portion of the steering shaft 6. A front fork 7 is coupled to a bottom portion of the steering shaft 6. A front wheel 8 is supported by a bottom end portion of the front fork 7. A front cover 18 is located to the front of the head pipe 3.

The motorcycle 1 includes a power unit 10. The power unit 10 is supported by the vehicle body frame 4. In this embodiment, the power unit 10 is swingably supported by the vehicle body frame 4. Although not shown, the power unit 10 includes an internal combustion engine, a V-belt type continuously variable transmission, and an output shaft that outputs torque. The output shaft of the power unit 10 is coupled to a rear wheel 9. The power unit 10 in this embodiment is merely an example, and there is no specific limitation on the structure of the power unit 10. The power unit 10 may be non-swingably supported by the vehicle body frame 4. The internal combustion engine may be a single-cylinder internal combustion engine or a multi-cylinder internal combustion engine. Instead of the continuously variable transmission, a stepped transmission may be used.

In this embodiment, the output shaft of the power unit 10 is directly coupled to a driving shaft of the rear wheel 9. Alternatively, the output shaft of the power unit 10 may be coupled to the driving shaft of the rear wheel 9 via a power transmission member such as a chain or the like. A rear suspension unit 11 is connected to the second inclining frame portions 4Bc of the vehicle body frame 4 and to a rear portion of the power unit 10. The rear suspension unit 11 is located to the left of the rear wheel 9. A silencer 19 is located to the right of the rear wheel 9.

As shown in Figure 2, a rider 100 sits on the seat 2. The seat 2 is located to the rear of the head pipe 3. The seat 2 is located above the power unit 10. The seat 2 is supported by the vehicle body frame body 4.

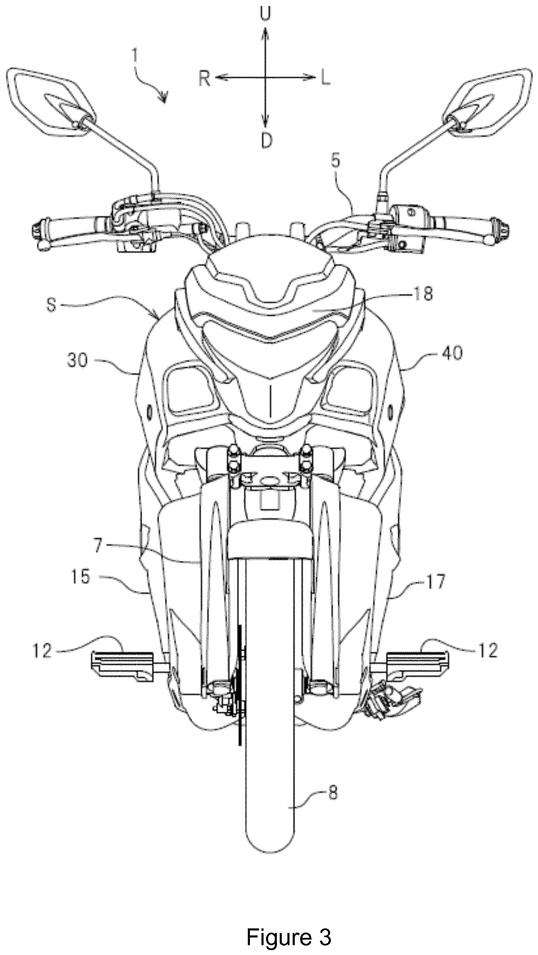

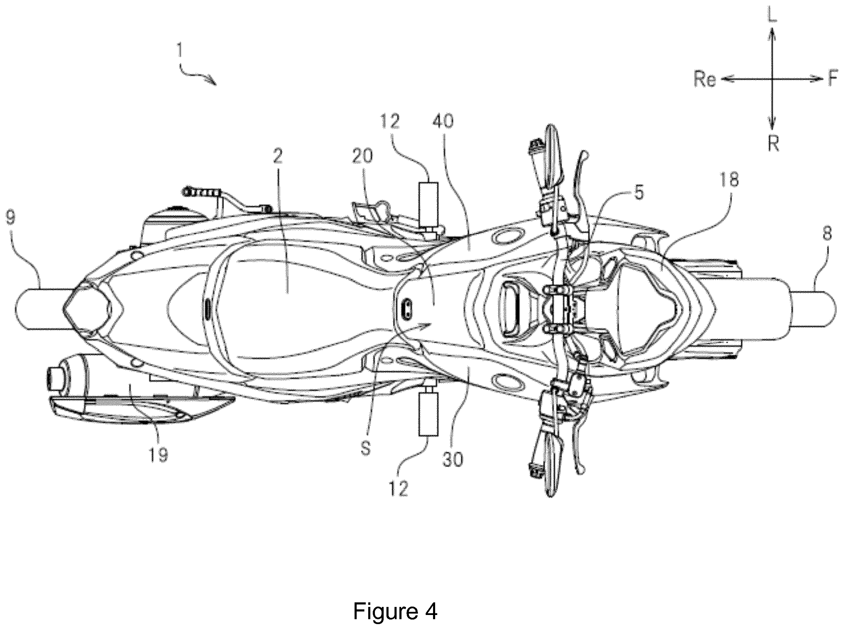

As shown in Figures 3, 4 and 5, the motorcycle 1 includes left and right footrests 12. The left footrest 12 extends leftward, and the right footrest 12 extends rightward. The footrests 12 are each shaped like a rod. As shown in Figure 1, the footrests 12 are supported by the support frames 4B of the vehicle body frame 4. Feet 101 of the rider 100 are put on the footrests 12 (see Figure 2).

The motorcycle 1 includes an accommodation unit S. The accommodation unit S is located between the head pipe 3 and the seat 2 in a vehicle front-rear direction. A portion of the accommodation unit S may overlap the head pipe 3 or the seat 2 as seen in a vehicle plan view and/or a vehicle side view. The accommodation unit S includes an accommodation box 20, a right side cover 30 and a left side cover 40 described later. An accommodation space 21 is defined in the accommodation unit S by the accommodation box 20, the right side cover 30 and the left side cover 40.

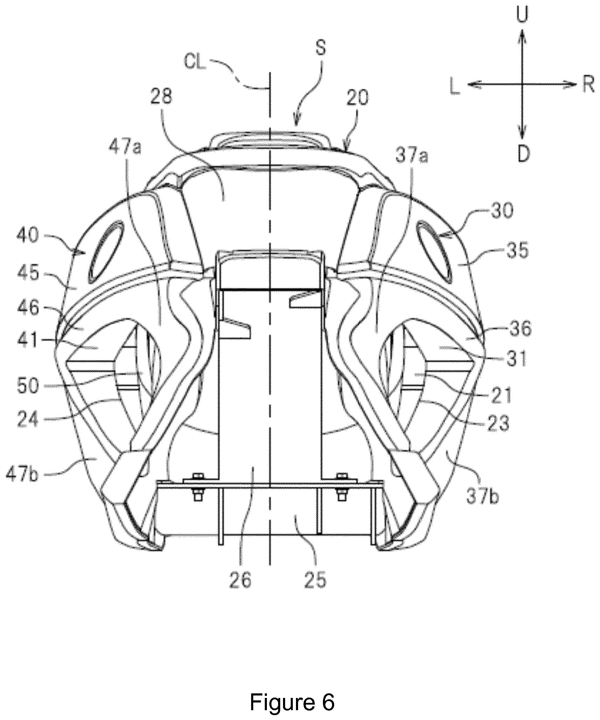

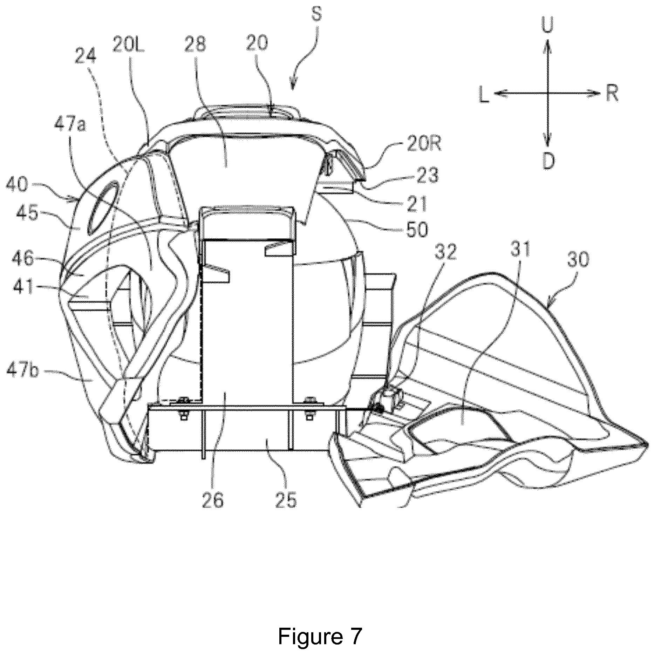

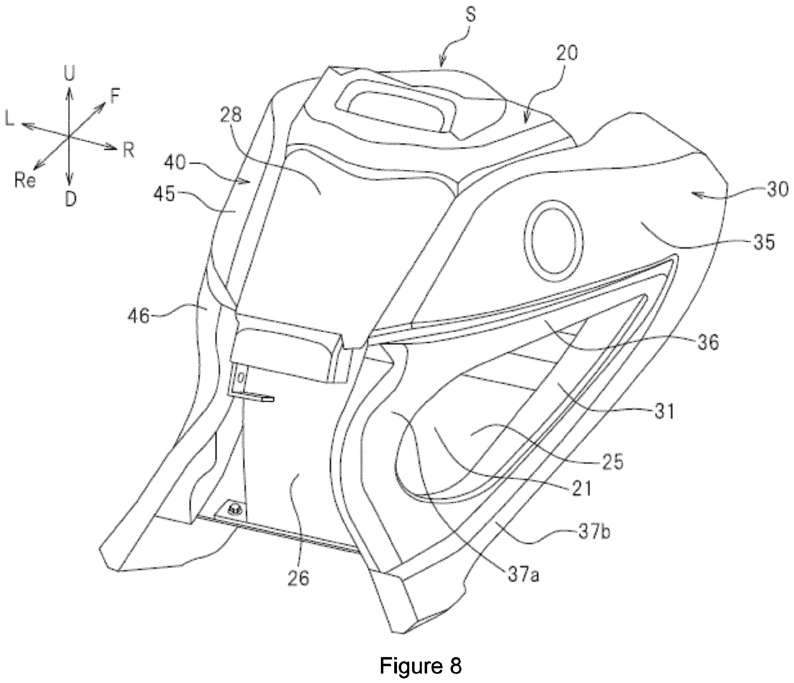

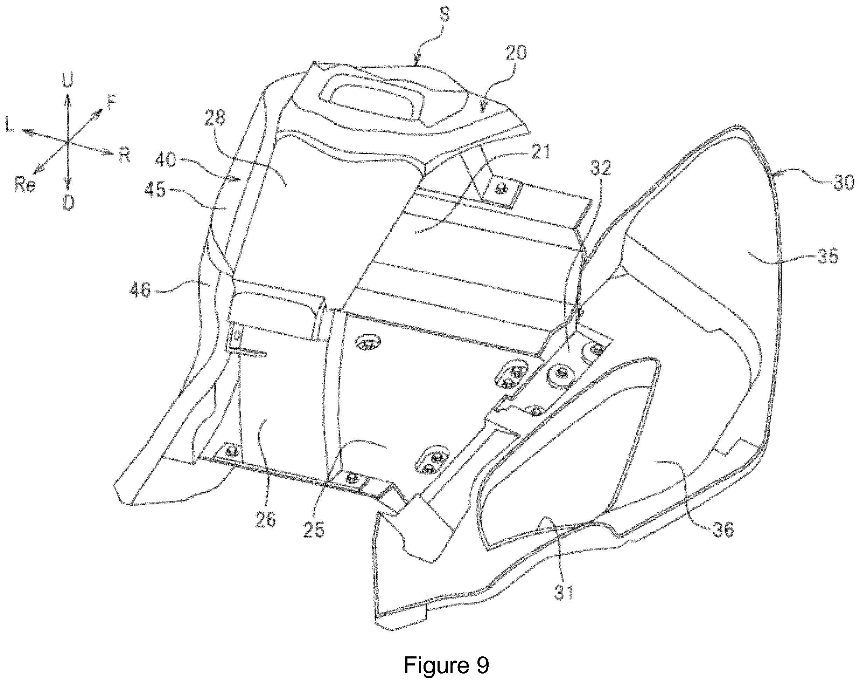

The accommodation box 20 is located to the rear of the head pipe 3 and to the front of the seat 2. The right side cover 30 is located to the right of the accommodation box 20. As shown in Figure 6, the left side cover 40 is located to the left of the accommodation box 20. The right side cover 30 is an example of a "first side cover", and the left side cover 40 is an example of a "second side cover". The right side cover 30 is openable/closable. The right side cover 30 is attached to the accommodation box 20 so as to be openable/closable. Figure 7 shows a state where the right side cover 30 is opened. The left side cover 40 is attached to the accommodation box 20 so as not to be openable/closable. Figure 8 is a perspective view of the accommodation unit S in a state where the right side cover 30 is closed. FIG. 9 is a perspective view of the accommodation unit S in the state where the right side cover 30 is opened.

As shown in Figure 7, an item 50 such as a helmet or the like can be accommodated in the accommodation space 21. In Figures 8 and 9, the item 50 is omitted. The item 50 is not limited to a helmet and may be any other item. The accommodation box 20 includes a right opening 23 formed in a right portion 20R thereof. The accommodation box 20 includes a left opening 24 formed in a left portion 20L thereof. The right opening 23 is opened rightward. The left opening 24 is opened leftward. The right opening 23 is an example of a "first opening", and the left opening 24 is an example of a "second opening". In this embodiment, the right opening 23 and the left opening 24 are separated from each other. Alternatively, the right opening 23 and the left opening 24 may be partially continuous with each other. In this embodiment, the right opening 23 and the left opening 24 are formed to be bilaterally symmetrical with each other. The right opening 23 and the left opening 24 do not need to be bilaterally symmetrical to each other. The right opening 23 and the left opening 24 may have the same size as each other, or may have different sizes from each other.

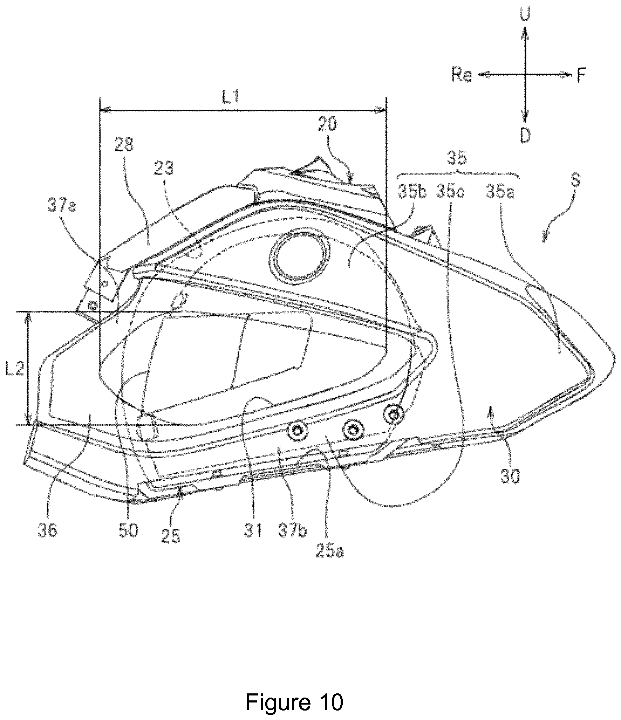

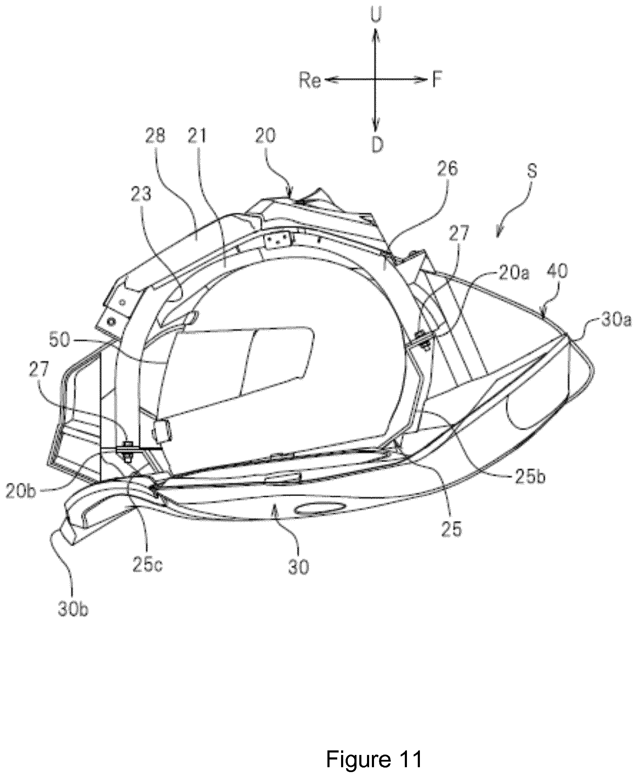

Figure 10 is a side view of the accommodation box 20, the right side cover 30, and the left side cover 40 in the state where the right side cover 30 is closed. Figure 11 is a side view of the accommodation box 20, the right side cover 30, and the left side cover 40 in the state where the right side cover 30 is opened. As shown in Figure 11, the accommodation box 20 includes a bottom plate 25 and a frame 26 located above the bottom plate 26. The frame 26 and the bottom plate 25 are secured to each other by bolts 27. A top cover 28 is secured above the frame 26. The bottom plate 25 plays a role of supporting the item 50. The bottom plate 25 includes a planar portion 25a (see Figure 10), a front portion 25b extending upward from a front end portion of the planar portion 25a, and a rear portion 25c extending upward from a rear end portion of the planar portion 25a. The frame 26 is curved, e.g. in a convexed manner. The frame 26 has a thickness larger than that of the bottom plate 25. The right opening 23 is defined by an inner edge of the bottom plate 25, an inner edge of the frame 26 and an inner edge of the top cover 28 as seen from the right of the motorcycle 1 (see Figure 10). Although not shown, the left opening 24 is defined by an inner edge of the bottom plate 25, an inner edge of the frame 26 and an inner edge of the top cover 28 as seen from the left of the motorcycle 1.

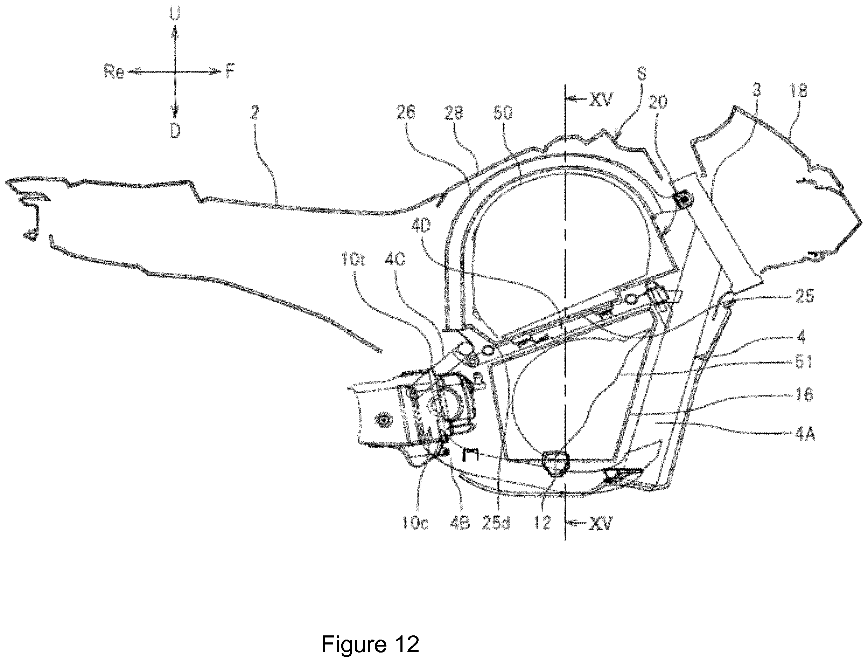

As shown in Figure 12, the engine of the power unit 10 includes a cylinder 10c. The accommodation box 20 is located above and/or higher than the cylinder 10c. The bottom plate 25 of the accommodation box 20 is located above and/or higher than the cylinder 10c. A bottom end 25d of the bottom plate 25 is located above and/or higher than a top end 10t of the cylinder 10c.

The above-described structure of the accommodation box 20 is merely an example. There is no specific limitation on the structure of the accommodation box 20. The accommodation box 20 may have an opening in a portion other than the right portion 20R and the left portion 20L. The accommodation box 20 may be formed of a combination of a plurality of members, or may be formed of a single member, for example.

As shown in Figure 10, the right side cover 30 includes a first cover 35 and a second cover 36. The first cover 35 and the second cover 36 may be separate from each other or may be integral with each other. The first cover 35 is formed to be V-shaped. The first cover 35 includes a front portion 35a, a top portion 35b extending obliquely in a rearward and upward direction from the front portion 35a, and a bottom portion 35c extending obliquely in a rearward and downward direction from the front portion 35a. The second cover 36 is located between the top portion 35b and the bottom portion 35c of the first cover 35.

The right side cover 30 includes an opening 31 formed therein. The opening 31 is formed in the second cover 36. The opening 31 in this embodiment is merely an example, and there is no specific limitation on the position or the shape of the opening 31. For example, the opening 31 may be formed as extending between the first cover 35 and the second cover 36. The opening 31 of the right side cover 30 is smaller than the right opening 23 of the accommodation box 20. As seen in the vehicle side view, the opening 31 of the right side cover 30 overlaps the right opening 23 of the accommodation box 20. As shown in Figure 11, in the state where the right side cover 30 is opened, the right opening 23 of the accommodation box 20 is entirely exposed outside. As shown in Figure 10, in the state where the right side cover 30 is closed, a portion of the right opening 23 of the accommodation box 20 is covered with the right side cover 30. However, since the right side cover 30 includes the opening 31 formed therein, the portion of the right opening 23 that overlaps the opening 31 is kept exposed outside even in the state where the right side cover 30 is closed. The opening 31 communicates the accommodation space 21 and the outside of the accommodation unit S in the state where the right side cover 30 is closed.

As seen in the vehicle side view, the right side cover 30 is larger than the accommodation box 20. As shown in Figure 11, a front end 30a of the right side cover 30 is located to the front of a front end 20a of the accommodation box 20, and a rear end 30b of the right side cover 30 is located to the rear of a rear end 20b of the accommodation box 20.

As shown in Figure 10, as seen in the vehicle side view, the opening 31 is formed to be convexed forward. As seen in the vehicle side view, the opening 31 is formed to be convexed rearward. For example, the opening 31 is arranged such that it reduces in size in a vehicle up-down direction as the opening 31 extends forwardly and/or rearwardly of a portion of the opening 31 that has the largest size in the vehicle up-down direction. A portion of the opening 31 that has a largest size in a vehicle up-down direction is located to the rear of the center position of the opening 31 in the vehicle front-rear direction. A size L1 of the opening 31 in the vehicle front-rear direction is larger than a size L2 of the opening 31 in the vehicle up-down direction. The opening 31 in this embodiment is merely an example, and there is no specific limitation on the shape or the size of the opening 31 of the right side cover 30.

As shown in Figure 1, in the state where the motorcycle 1 is at a stop, a bottom end 31a of the opening 31 is located above a top end 8a of the front wheel 8. In the state where the motorcycle 1 is at a stop, the bottom end 31a of the opening 31 is located above a top end 9a of the rear wheel 9. In the state where the motorcycle 1 is at a stop, the bottom end 31a of the opening 31 is located above a top end 10a of the power unit 10. The opening 31 is located to the rear of a rear end 8b of the front wheel 8 and to the front of a front end 9b of the rear wheel 9. The opening 31 is located above the footrests 12. A front end 31b of the opening 31 is located to the front of the footrests 12, and a rear end 31c of the opening 31 is located to the rear of the footrests 12. The opening 31 is formed at a position overlapping the seat 2 in the vehicle up-down direction. The opening 31 is located below a top edge of the seat 2 in the vehicle side view.

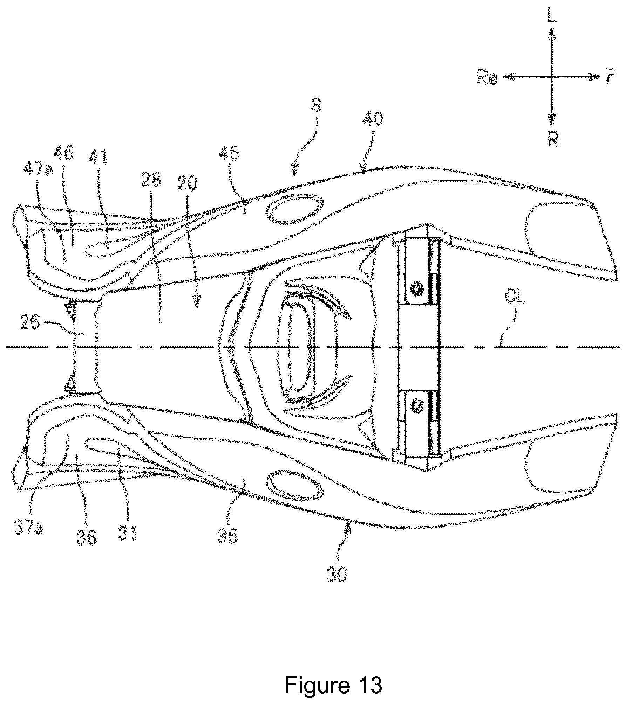

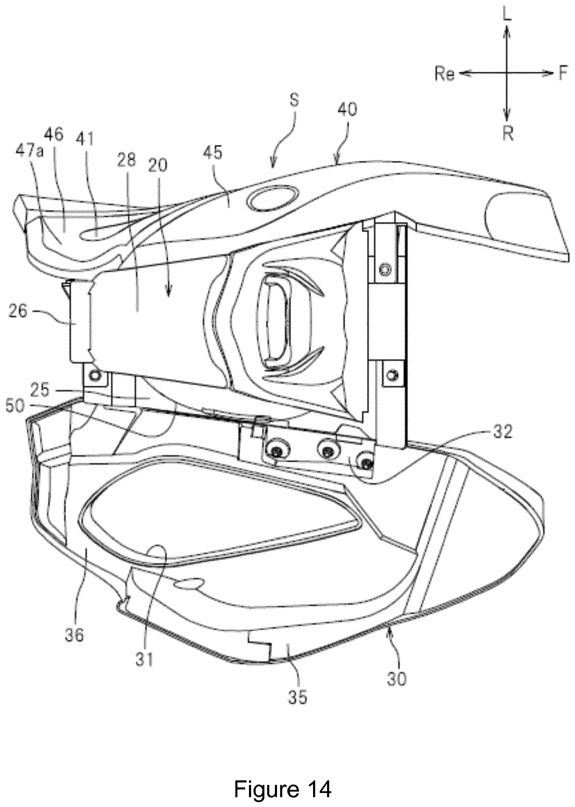

As shown in Figure 13, the right side cover 30 is curved so that at least a rear portion of the right side cover 30 becomes closer to a vehicle center line CL as it extends rearwardly. Figure 14 shows the state where the right side cover 30 is opened. As shown in Figure 6, an edge of the opening 31 of the right side cover 30 is curved so as to be closer to the vehicle center line CL as it extends rearwardly.

As shown in Figure 7, a hinge mechanism 32 is provided in a bottom portion of the right side cover 30. Owing to the hinge mechanism 32, the right side cover 30 is rotatable as being centered around the bottom portion thereof. Owing to the hinge mechanism 32, the right side cover 30 is openable/closable. The right side cover 30 can open or close the right opening 23 of the accommodation box 20. When the right side cover 30 in the closed state is rotated rightward, the right opening 23 of the accommodation box 20 can be entirely exposed outside. As can be seen, the right side cover 30 is opened, so that the item 50 (especially, the item 50 that is larger than the opening 31) can be put into, or taken out from, the accommodation box 20 on the right side thereof. When the right side cover 30 in the open state is rotated leftward, the right side cover 30 can be closed. The hinge mechanism 32 is not limited to being located in the bottom portion of the right side cover 30. For example, the hinge mechanism 32 may be located in a top portion, a front portion or a rear portion of the right side cover 30. The mechanism that opens or closes the right side cover 30 is not limited to the hinge mechanism 32. The right side cover 30 may be fit into the accommodation box 20. The right side cover 30 may be separable from the accommodation box 20. There is no specific limitation on the mechanism that opens or closes the right side cover 30, and may be any of various known mechanisms.

As shown in Figure 6, like the right side cover 30, the left side cover 40 includes a first cover 45 and a second cover 46. The left side cover 40 includes an opening 41 formed therein. The opening 41 is formed in the second cover 46. The opening 41 of the left side cover 40 is smaller than the left opening 24 (see Figure 7) of the accommodation box 20. As seen in the vehicle side view, the opening 41 of the left side cover 40 overlaps the left opening 24 of the accommodation box 20. In this embodiment, the left side cover 40 is shaped to be bilaterally symmetric with the right side cover 30. Therefore, the left side cover 40 will not be described in detail herein. The opening 41 of the left side cover 40 is shaped to be bilaterally symmetric with the opening 31 of the right side cover 30. The left side cover 40 is curved so as to be closer to the vehicle center line CL as it extends rearwardly. An edge of the opening 41 of the left side cover 40 is also curved so as to be closer to the vehicle center line CL as it extends rearwardly. The opening 41 communicates the accommodation space 21 and the outside of the accommodation unit S.

The right side cover 30 and the left side cover 40 do not need to be bilaterally symmetric with each other. The right opening 23 and the left opening 24 do not need to be bilaterally symmetric with each other. The right side cover 30 and the left side cover 40 in this embodiment are each merely an example. The right side cover 30 and the left side cover 40 may have any other shape.

As seen in the vehicle side view, the opening 31 of the right side cover 30, the right opening 23 of the accommodation box 20, the left opening 24 of the accommodation box 20 and the opening 41 of the left side cover 40 overlap each other. Therefore, as shown in Figure 1, a hole 25A running through the right side cover 30, the accommodation box 20 and the left side cover 40 is formed in the motorcycle 1. In the state where the right side cover 30 is closed, the item 50 in the accommodation box 20 is seen through the opening 31 of the right side cover 30. The item 50 in the accommodation box 20 is seen through the opening 41 of the left side cover 30.

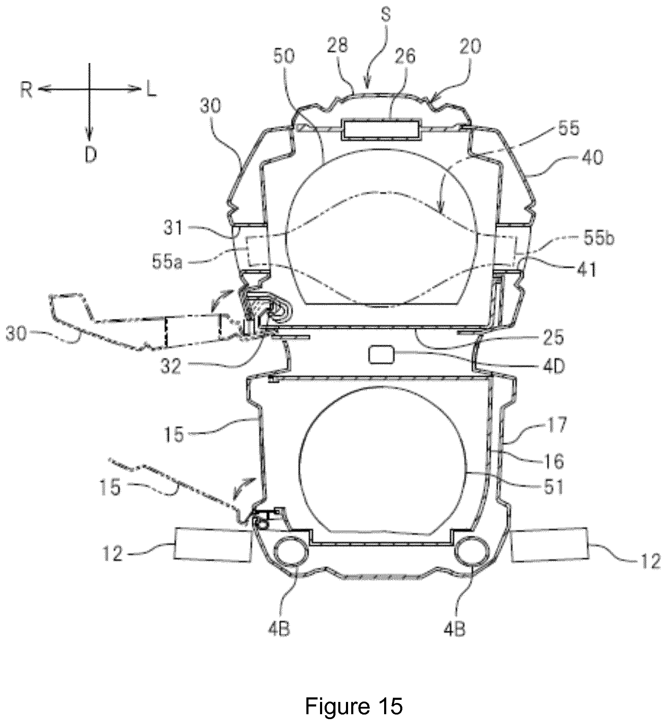

As shown in Figure 1, an under side cover 15 is located below the right side cover 30. A space below the accommodation box 20 is covered with the underside cover 15. In this embodiment, the cross frame 4C and the center frame 4D are located below the accommodation box 20. A space enclosed by the main frame 4A, the support frames 4B, the cross frame 4C and the center frame 4D of the vehicle body frame 4 is covered with the underside cover 15. The space is usable as a space that accommodates parts and components of the vehicle. For example, a fuel tank may be installed in the space. Alternatively, the space is usable as a space that accommodates another item. For example, as shown in Figure 12, another accommodation box 16 may be located in the space. In this case, as shown in Figure 15, it is preferable that the underside cover 15 is openable/closable. In the case where the underside cover 15 is openable/closable, another item 51 can be put into, or taken out from, the space on the sides thereof by opening the underside cover 15. In the case where the other accommodation box 16 is located in the space, the fuel tank may be located, for example, below the seat 2. An under side cover 17 is located below the left side cover 40. The underside cover 17 is not openable/closable. Alternatively, the underside cover 17 may be openable/closable.

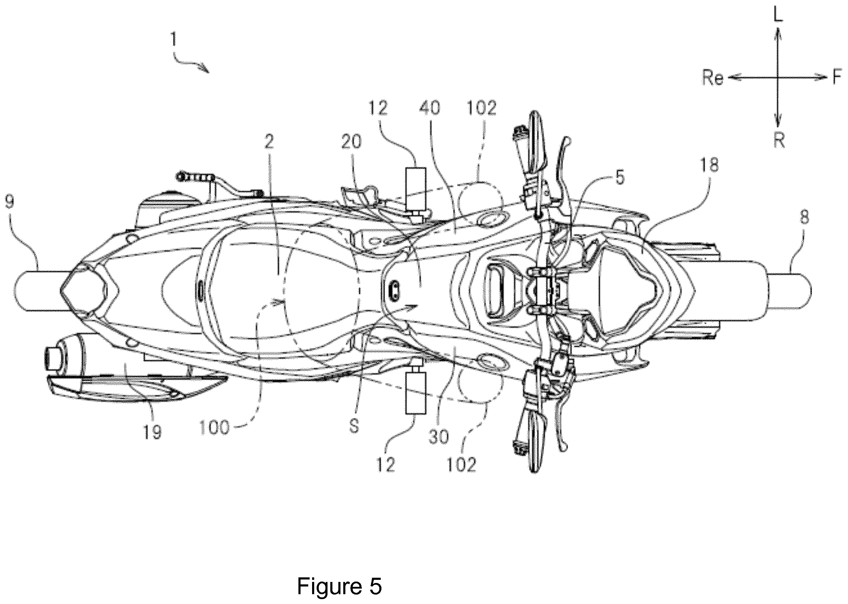

As shown in Figure 2, the rider 100 assumes the knee grip posture while riding the motorcycle 1. More specifically, while riding the motorcycle 1, the rider 100 holds a portion of the motorcycle 1 that is to the front of the seat 2, namely, the right side cover 30, the accommodation box 20 and the left side cover 40, between his/her left and right legs 102. In this manner, the rider 100 can easily assume the knee grip posture and can enjoy the comfort of riding. As described above, the opening 31 is formed in the right side cover 30, and the opening 41 is formed in the left side cover 40. Therefore, the rider 100 can easily put his/her legs 102 toward the vehicle center line CL, and does not need to open their left and right legs 102 wide. The rider 100 can assume the knee grip posture easily. For example, as shown in Figure 5, the rider 100 can put portions of his/her legs 102 into the opening 31 of the right side cover 30 and the opening 41 of the left side cover 40 and thus assume the knee grip posture without opening their left and right legs 102 wide. As shown in Figure 6, the right side cover 30 and the left side cover 40 are curved so as to be closer to the vehicle center line CL as they extend rearwardly. This also allows the rider 100 to assume the knee grip posture easily. As shown in Figure 2, a portion 37a of the right side cover 30 that is obliquely upward and rearward with respect to the opening 31, and a portion 37b of the right side cover 30 that is below the opening 31, are preferably usable as contact portions to which the leg 102 of the rider 100 is pressed. As shown in Figure 6, a portion 47a of the left side cover 40 that is obliquely upward and rearward with respect to the opening 41, and a portion 47b of the left side cover 40 that is below the opening 41, are preferably usable as contact portions to which the leg 102 of the rider 100 is pressed.

As described above, the motorcycle 1 in this embodiment includes the accommodation box 20 located to the rear of the head pipe 3 and to the front of the seat 2. The accommodation box 20 is provided with the openable/closable right side cover 30. In the motorcycle 1, the item 50 can be put into, or taken out from, the accommodation box 20 on the right side of the accommodation box 20 by opening the right side cover 30.

The right side cover 30 is located to the right of the accommodation box 20. Therefore, when the size of the accommodation box 20 in a left-right direction (vehicle width direction) is increased, the right side cover 30 is located to the further right of the accommodation box 20. Similarly, the left side cover 40 is located to the left of the accommodation box 20. Therefore, when the size of the accommodation box 20 in the left-right direction is increased, the left side cover 40 is located to the further left of the accommodation box 20. When the size of the accommodation box 20 in the left-right direction is increased in order to enlarge the accommodation space 21, the distance between the right side cover 30 and the left side cover 40 is increased. In other words, the size in the left-right direction of the portion of the motorcycle 1 to the front of the seat 2 is increased. However, the opening 31 is formed in the right side cover 30. Therefore, the rider 100 can put at least part of his/her right leg 102 in and along the opening 31 and thus put the right leg 102 into close contact with the right side cover 30 without opening the left and right legs 102 wide. Thus, the rider 100 can assume the knee grip posture easily. This makes it unnecessary to decrease the size of the accommodation box 20 in the left-right direction. The accommodation space 21 can have a sufficiently large size. Therefore, the motorcycle 1 in this embodiment can provide the sufficiently large accommodation space 21 with certainty and also improve the comfort of riding.

The item 50 to be accommodated in the accommodation box 20 is not limited to having any specific shape. Since the opening 31 is formed in the right side cover 30, a portion of the item 50 can be located in the opening 31. As represented with phantom line in Figure 15, an item 55 can be accommodated in the accommodation box 20 such that a portion 55a of the item 55 is located in the opening 31. Alternatively, although not shown, an item can be accommodated in the accommodation box 20 such that a portion of the item is located outside the right side cover 30 through the opening 31.

In the motorcycle 1, the opening 41 is formed in the left side cover 40. Therefore, the rider 100 can put his/her left leg 102 in and along the opening 41 of the left side cover 40 and thus assume the knee grip posture more easily. As shown in Figure 15, the item 55 can be accommodated in the accommodation box 20 such that a portion 55b of the item 55 is located in the opening 41. Alternatively, an item can be accommodated in the accommodation box 20 such that a portion of the item is located outside the left side cover 40 through the opening 41.

As shown in Figure 1, as seen in the vehicle side view, the opening 31 of the right side cover 30, the right opening 23 of the accommodation box 20, the left opening 24 of the accommodation box 20 and the opening 41 of the left side cover 40 overlap each other. The motorcycle 1 includes the hole 25A running through the right side cover 30, the accommodation box 20 and the left side cover 40. Since the opening 31 of the right side cover 30 and the opening 41 of the left side cover 40 are located at matching positions, the rider 100 can assume the knee grip posture easily, and also as shown in Figure 15, the item 55 that is long in the left-right direction can be accommodated easily.

As shown in Figure 1, in the state where the motorcycle is at a stop, the bottom end 31a of the opening 31 of the right side cover 30 is located above the top end 8a of the front wheel 8. The opening 31 is located at a relatively high position. The portion 37b of the right side cover 30 that is below the opening 31 is preferably usable as a contact portion to which the leg 102 of the rider 100 is pressed. The opening 31 is located at such a position that makes it easy for the rider 100 to assume the knee grip posture. Therefore, the rider 100 can assume the knee grip posture easily.

The footrest 12 is located to the rear of the front end 31b of the opening 31 of the right side cover 30 and to the front of the rear end 31c of the opening 31. In other words, the front end 31b of the opening 31 is located to the front of the footrest 12, and the rear end 31c of the opening 31 is located to the rear of the footrest 12. The opening 31 is located at such a position that makes it easy for the rider 100 to assume the knee grip posture. Therefore, the rider 100 can assume the knee grip posture easily.

As shown in Figure 10, the size L1 in the vehicle front-rear direction of the opening 31 of the right side cover 30 is larger than the size L2 in the vehicle up-down direction of the opening 31. As shown in Figure 2, the rider 100 can easily put his/her leg 102 in and along the opening 31. Therefore, the rider 100 can assume the knee grip posture easily.

An embodiment of the present invention has been described. However, the present invention is not limited to the above-described embodiment. In the above-described embodiment, the right side cover 30 is openable/closable whereas the left side cover 40 is not openable/closable. Alternatively, the right side cover 30 may be non-openable/closable whereas the left side cover 40 may be openable/closable. In this case, the item 50 can be put into, or taken out from, the accommodation box 20 on the left side of the accommodation box 20. Still alternatively, both the right side cover 30 and the left side cover 40 may be openable/closable. In this case, the item 50 can be put into, or taken out from, the accommodation box 20 on both of the right side and the left side of the accommodation box 20.

The present invention may be embodied in many various forms. This disclosure should be regarded as providing embodiments of the principle of the present invention. These embodiments are provided with the understanding that they are not intended to limit the present invention to the preferred embodiments described in the specification and/or shown in the drawings. The present invention is not limited to the embodiment described herein. The elements of each claim should be interpreted broadly based on the terms used in the claim, and should not be limited to any of the embodiments described in this specification or used during the prosecution of the present application.

### Reference Signs List

- 1: Motorcycle (saddle-type vehicle)
- 2: Seat
- 3: Head pipe
- 4: Vehicle body frame
- 6: Steering shaft
- 7: Front fork
- 8: Front wheel
- 8a: Top end of front wheel
- 9: Rear wheel
- 10: Power unit
- 12: Footrest
- 20: Accommodation box
- 20a: Front end of accommodation box
- 20b: Rear end of accommodation box
- 23: Right opening (first opening)
- 24: Left opening (second opening)
- 30: Right side cover (first side cover)
- 30a: Front end of first side cover
- 30b: Rear end of first side cover
- 31: Opening of the right side cover (opening of the first side cover)
- 31a: Bottom end of the opening of the right side cover
- 31b: Front end of the opening of the right side cover
- 31c: Rear end of the opening of the right side cover
- 32: Hinge mechanism
- 35: First cover part
- 35a: Front portion of first cover part
- 35b: Top portion of first cover part
- 35c: Bottom portion of first cover part
- 36: Second cover part
- 40: Left side cover (second side cover)
- 41: Opening of the left side cover (opening of the second side cover)
- 100: Rider
- 102: Rider's legs
- L1: Size of the right hand opening in a vehicle front rear direction
- L2: Size of the right hand opening in a vehicle up down direction
- L11: Distance between the rear end of the head pipe (3) and the rear end (31c) of the opening (31)
- L22: Distance between the rear end (31c) of the opening and the front end of the seat (2).

## Claims

1. A saddle-type or straddle-type vehicle comprising:
a head pipe (3);
a vehicle body frame (4) extending rearward from the head pipe (3);
a seat (2) for seating a rider (100), the seat (2) being supported by the vehicle body frame (4) at a position to the rear of the head pipe (3);
an accommodation box (20) located to the rear of the head pipe (3) and to the front of the seat (2), the accommodation box (20) comprising a first opening (23) formed in at least one of a left portion and a right portion thereof; and
an openable/closable first side cover (30) located outwardly of the first opening (23) of the accommodation box (20) in a vehicle width direction;
wherein the first side cover (30) includes an opening (31) overlapping the first opening (23) of the accommodation box (20) as seen in a vehicle side view when the first side cover (30) is closed, wherein:
the accommodation box (20) includes a second opening (24) formed in the left portion or the right portion thereof that is opposite to the portion in which the first opening (23) is formed;
the saddle-type vehicle further includes a second side cover (40) located outwardly in the vehicle width direction to the second opening (24) of the accommodation box (20); and
the second side cover (40) includes an opening (41) overlapping the second opening (24) of the accommodation box (20) as seen in the vehicle side view when the second side cover (40) is closed, **characterized in that**
the opening (31) of the first side cover (30), the first opening (23) of the accommodation box (20), the second opening (24) of the accommodation box (20) and the opening (41) of the second side cover (40) overlap each other as seen in the vehicle side view, so that a hole (25A) running through the first side cover (30), the accommodation box (20) and the second side cover (40) is formed in the vehicle.

2. A saddle-type vehicle according to claim 1, further comprising:
a steering shaft (6) inserted into the head pipe (3);
a front fork (7) coupled to the steering shaft (6); and
a front wheel (8) supported by the front fork (7);
wherein a bottom end (31a) of the opening (31) of the first side cover (30) is located above a top end (8a) of the front wheel (8).

3. A saddle-type vehicle according to claim 1 or 2, further comprising a footrest (12) located below the accommodation box (20) and supported by the vehicle body frame (4);
wherein the footrest (12) is located to the rear of a front end (31b) of the opening (31) of the first side cover (30) and to the front of a rear end (31c) of the opening (31) of the first side cover (30).

4. A saddle-type vehicle according to any one of claims 1 through 3, wherein a size (L1) in a vehicle front-rear direction of the opening (31) of the first side cover (30) is larger than a size (L2) in a vehicle up-down direction of the opening (31) of the first side cover (30).

5. A saddle type vehicle according to any preceding claim, wherein the first and/or second side cover (30, 40) comprises a first cover part (35) and a second cover part (36), wherein the first cover part (35) includes a front portion (35a), a top portion (35b) and a bottom portion (35c) and at least part of the second cover part (36) is located or locatable between the top portion (35b) and the bottom portion (35c) of the first cover part (35).

6. A saddle-type vehicle according to claim 5, wherein the respective opening (31, 41) of the first and/or second side cover (30, 40) is formed in the respective second cover part (36) or extends between the respective first cover part (35) and second cover part (36).

7. A saddle-type vehicle according to any preceding claim, wherein the opening (31) of the first side cover (30) and/or the opening (41) of the second side cover (40) is smaller than the respective first and/or second opening (23, 24) of the accommodation box (20).

8. A saddle-type vehicle according to any preceding claim, wherein the first opening (23) of the accommodation box (20) is entirely exposed outside when the first side cover (30) is open and partially covered with the first side cover (30) when the first side cover (30) is closed, with the portion of the opening (23) of the accommodation box (20) that overlaps the opening (31) in the first side cover (30) being kept exposed outside in the state when the first side cover (30) is closed.

9. A saddle-type vehicle according to any preceding claim, wherein at least a rear portion of the first and/or second side cover (30, 40) and/or an edge of the opening (31, 41) of the first and/or second side cover (30, 40) is curved toward a vehicle center line (CL) as it extends rearwardly.

10. A saddle-type vehicle according to any preceding claim, wherein the opening (31, 41) in the first and/or second side cover (30, 40) reduces in size in a vehicle up-down direction as the opening (31, 41) in the first and/or second side cover (30, 40) extends forwardly and/or rearwardly of a portion of the opening (31, 41) in the side cover (30, 40) that has the largest size in the vehicle up-down direction.

11. A saddle-type vehicle according to claim 10, wherein the portion of the opening (31, 41) in the first and/or second side cover (30, 40) that has a largest size in a vehicle up-down direction is located to the rear of the center position of the opening (31, 41) in the side cover (30, 40) in the vehicle front-rear direction.

12. A saddle-type vehicle according to any preceding claim, wherein the first and/or second side cover (30, 40) is hingably and/or pivotably mounted or mountable and the first and/or second side cover (30, 40) is openable/closable by pivoting the first and/or second side cover (30, 40) and/or moving the first and/or second side cover (30, 40) around a hinge mechanism (32).

## Patentansprüche

1. Satteltyp- oder Reitsitztyp-Fahrzeug, das Folgendes umfasst:
ein Steuerkopfrohr (3),
einen Fahrzeugaufbaurahmen (4), der sich von dem Steuerkopfrohr (3) aus nach hinten erstreckt,
einen Sitz (2) zum Platzieren eines Fahrers (100), wobei der Sitz (2) durch den Fahrzeugaufbaurahmen (4) an einer Position hinter dem Steuerkopfrohr (3) getragen wird,
ein Unterbringungsfach (20), das hinter dem Steuerkopfrohr (3) und vor dem Sitz (2) angeordnet ist, wobei das Unterbringungsfach (20) eine erste Öffnung (23) umfasst, die in wenigstens einem von einem linken Abschnitt und einem rechten Abschnitt desselben geformt ist, und
eine zu öffnende/zu schließende erste Seitenabdeckung (30), die von der ersten Öffnung (23) des Unterbringungsfachs (20) aus in einer Fahrzeugbreitenrichtung nach außen angeordnet ist,
wobei die erste Seitenabdeckung (30) eine Öffnung (31) einschließt, die, gesehen in einer Fahrzeugseitenansicht, die erste Öffnung (23) des Unterbringungsfachs (20) überlappt, wenn die erste Seitenabdeckung (30) geschlossen ist, wobei:
das Unterbringungsfach (20) eine zweite Öffnung (24) einschließt, die in dem linken Abschnitt oder dem rechten Abschnitt derselben geformt ist, der zu dem Abschnitt entgegengesetzt ist, in dem die erste Öffnung (23) geformt ist,
das Satteltyp-Fahrzeug ferner eine zweite Seitenabdeckung (40) einschließt, die in der Fahrzeugbreitenrichtung nach außen zu der zweiten Öffnung (24) des Unterbringungsfachs (20) angeordnet ist, und
die zweite Seitenabdeckung (40) eine Öffnung (41) einschließt, die, gesehen in der Fahrzeugseitenansicht, die zweite Öffnung (24) des Unterbringungsfachs (20) überlappt, wenn die zweite Seitenabdeckung (40) geschlossen ist, **dadurch gekennzeichnet, dass**
die Öffnung (31) der ersten Seitenabdeckung (30), die erste Öffnung (23) des Unterbringungsfachs (20), die zweite Öffnung (24) des Unterbringungsfachs (20) und die Öffnung (41) der zweiten Seitenabdeckung (40), gesehen in der Fahrzeugseitenansicht, einander überlappen, so dass ein Loch (25A), das durch die erste Seitenabdeckung (30), das Unterbringungsfach (20) und die zweite Seitenabdeckung (40) verläuft, in dem Fahrzeug geformt ist.

2. Satteltyp-Fahrzeug nach Anspruch 1, das ferner Folgendes umfasst:
eine Lenkwelle (6), die in das Steuerkopfrohr (3) eingesetzt ist,
eine Vordergabel (7), die mit der Lenkwelle (6) verbunden ist, und
ein Vorderrad (8), das durch die Vordergabel (7) getragen wird,
wobei ein unteres Ende (31a) der Öffnung (31) der ersten Seitenabdeckung (30) oberhalb eines oberen Endes (8a) des Vorderrades (8) angeordnet ist.

3. Satteltyp-Fahrzeug nach Anspruch 1 oder 2, das ferner eine Fußstütze (12) umfasst, die unterhalb des Unterbringungsfachs (20) angeordnet ist und durch den Fahrzeugaufbaurahmen (4) getragen wird,
wobei die Fußstütze (21) hinter einem vorderen Ende (31b) der Öffnung (31) der ersten Seitenabdeckung (30) und vor einem hinteren Ende (31c) der Öffnung (31) der ersten Seitenabdeckung (30) angeordnet ist,

4. Satteltyp-Fahrzeug nach einem der Ansprüche 1 bis 3, wobei eine Größe (L1) der Öffnung (31) der ersten Seitenabdeckung (30) in einer Fahrzeugrichtung von vorn nach hinten größer ist als eine Größe (L2) der Öffnung (31) der ersten Seitenabdeckung (30) in einer Fahrzeugrichtung von oben nach unten.

5. Satteltyp-Fahrzeug nach einem der vorhergehenden Ansprüche, wobei die erste und/oder die zweite Seitenabdeckung (30, 40) einen ersten Abdeckungsteil (35) und einen zweiten Abdeckungsteil (36) umfasst, wobei der erste Abdeckungsteil (35) einen vorderen Abschnitt (35a), einen oberen Abschnitt (35b) und einen unteren Abschnitt (35c) einschließt und wenigstens ein Teil des zweiten Abdeckungsteils (36) zwischen dem oberen Abschnitt (35b) und dem unteren Abschnitt (35c) des ersten Abdeckungsteils (35) angeordnet ist oder angeordnet werden kann.

6. Satteltyp-Fahrzeug nach Anspruch 5, wobei die jeweilige Öffnung (31, 41) der ersten und/oder der zweiten Seitenabdeckung (30, 40) in dem jeweiligen zweiten Abdeckungsteil (36) geformt ist oder sich zwischen dem jeweiligen ersten Abdeckungsteil (35) und dem zweiten Abdeckungsteil (36) erstreckt.

7. Satteltyp-Fahrzeug nach einem der vorhergehenden Ansprüche, wobei die Öffnung (31) der ersten Seitenabdeckung (30) und/oder die Öffnung (41) der zweiten Seitenabdeckung (40) kleiner ist als die jeweilige erste und/oder zweite Öffnung (23, 24) des Unterbringungsfachs (20).

8. Satteltyp-Fahrzeug nach einem der vorhergehenden Ansprüche, wobei die erste Öffnung (23) des Unterbringungsfachs (20) vollständig nach außen freigelegt ist, wenn die erste Seitenabdeckung (30) offen ist, und teilweise mit der ersten Seitenabdeckung (30) abgedeckt ist, wenn die erste Seitenabdeckung (30) geschlossen ist, wobei der Abschnitt der Öffnung (23) des Unterbringungsfachs (20), der die Öffnung (31) in der ersten Seitenabdeckung (30) überlappt, in dem Zustand, wenn die erste Seitenabdeckung (30) geschlossen ist, nach außen freigelegt bleibt.

9. Satteltyp-Fahrzeug nach einem der vorhergehenden Ansprüche, wobei wenigstens ein hinterer Abschnitt der ersten und/oder der zweiten Seitenabdeckung (30/40) und/oder eine Kante der Öffnung (31, 41) der ersten und/oder der zweiten Seitenabdeckung (30, 40) hin zu einer Fahrzeugmittellinie (CL) geneigt ist, wenn sie sich nach hinten erstreckt.

10. Satteltyp-Fahrzeug nach einem der vorhergehenden Ansprüche, wobei sich die Öffnung (31, 41) in der ersten und/oder der zweiten Seitenabdeckung (30, 40) in einer Fahrzeugrichtung von oben nach unten in der Größe verringert, wenn sich die Öffnung (31, 41) in der ersten und/oder der zweiten Seitenabdeckung (30, 40) sich vorwärts oder rückwärts von einem Abschnitt der Öffnung (31, 41) in der Seitenabdeckung (30,40) erstreckt, der die größte Größe in der Fahrzeugrichtung von oben nach unten aufweist.

11. Satteltyp-Fahrzeug nach Anspruch 10, wobei der Abschnitt der Öffnung (31, 41) in der ersten und/oder der zweiten Seitenabdeckung (30, 40), der eine größte Größe in der Fahrzeugrichtung von oben nach unten aufweist, in der Fahrzeugrichtung von vorn nach hinten hinter der Mittenposition der Öffnung (31, 41) in der Seitenabdeckung (30, 40) angeordnet ist.

12. Satteltyp-Fahrzeug nach einem der vorhergehenden Ansprüche, wobei die erste und/oder die zweite Seitenabdeckung (30, 40) klappbar und/oder schwenkbar angebracht ist oder angebracht werden kann und die erste und/oder die zweite Seitenabdeckung (30, 40) durch Schwenken der ersten und/oder der zweiten Seitenabdeckung (30/40) und/oder Bewegen der ersten und/oder der zweiten Seitenabdeckung (30/40) um einen Scharniermechanismus (32) zu öffnen/zu schließen ist.

## Revendications

1. Véhicule du type à selle ou du type à enfourcher, comprenant :
un tube de tête (3) ;
un cadre de châssis du véhicule (4) s'étendant vers l'arrière à partir du tube de tête (3) ;
un siège (2) pour asseoir un motocycliste (100), le siège (2) étant supporté par le cadre de châssis du véhicule (4) au niveau d'une position située vers l'arrière du tube de tête (3) ;
une boîte de rangement (20) disposée vers l'arrière du tube de tête (3) et vers l'avant du siège (2), la boîte de rangement (20) comprenant une première ouverture (23) formée dans au moins une d'une partie de gauche et d'une partie de droite de celle-ci; et
un premier capot latéral à ouverture/fermeture (30) disposé vers l'extérieur de la première ouverture (23) de la boîte de rangement (20), dans une direction de la largeur du véhicule ;
dans lequel le premier capot latéral (30) inclut une ouverture (31) chevauchant la première ouverture (23) de la boîte de rangement (20), vu dans une vue latérale du véhicule, lorsque le premier capot latéral (30) est fermé ; dans lequel :
la boîte de rangement (20) inclut une deuxième ouverture (24) formée dans sa partie gauche ou dans sa partie droite, opposée à la partie dans laquelle est formée la première ouverture (23) ;
le véhicule du type à selle inclut en outre un deuxième capot latéral (40) disposé vers l'extérieur, dans la direction de la largeur du véhicule, vers la deuxième ouverture (24) de la boîte de rangement (20) ; et
le deuxième capot latéral (40) inclut une ouverture (41) chevauchant la deuxième ouverture (24) de la boîte de rangement (20), vu dans la vue latérale du véhicule, lorsque le deuxième capot latéral est fermé ; **caractérisé en ce que** :
l'ouverture (31) du premier capot latéral (30), la première ouverture (23) de la boîte de rangement (20), la deuxième ouverture (24) de la boîte de rangement (20) et l'ouverture (41) du deuxième capot latéral (40) se chevauchent les unes les autres, vues dans la vue latérale du véhicule, de sorte qu'un trou (25A) s'étendant à travers le premier capot latéral (30), la boîte de rangement (20) et le deuxième capot latéral (40) est formé dans le véhicule.

2. Véhicule du type à selle selon la revendication 1, comprenant en outre :
un arbre de direction (6) inséré dans le tube de tête (3) ;
une fourche avant (7) accouplée à l'arbre de direction (6) ; et
une roue avant (8) supportée par la fourche avant (7) ;
dans lequel une extrémité inférieure (31a) de l'ouverture (31) du premier capot latéral (30) est disposée au-dessus d'une extrémité supérieure (8a) de la roue avant (8).

3. Véhicule du type à selle selon les revendications 1 ou 2, comprenant en outre un repose-pied (12) disposé au-dessous de la boîte de rangement (20) et supporté par le cadre de châssis du véhicule (4) ;
dans lequel le repose-pied (12) et disposé vers l'arrière de l'extrémité avant (31b) de l'ouverture (31) du premier capot latéral (30) et vers l'avant d'une extrémité arrière (31c) de l'ouverture (31) du premier capot latéral (30).

4. Véhicule du type à selle selon l'une quelconque des revendications 1 à 3, dans lequel une dimension (L1), dans une direction allant de l'avant vers l'arrière du véhicule, de l'ouverture (31) du premier capot latéral (30) est supérieure à une dimension (L2), dans la direction allant du haut vers le bas du véhicule, de l'ouverture (31) du premier capot latéral (30).

5. Véhicule du type à selle selon l'une quelconque des revendications précédentes, dans lequel le premier et/ou le deuxième capot latéral (30, 40) comprend une première partie de capot (35) et une deuxième partie de capot (36), dans lequel la première partie du capot (35) inclut une partie avant (35a), une partie supérieure (35b) et une partie inférieure (35c), et au moins une partie de la deuxième partie du capot (36) est disposée ou peut être disposée entre la partie supérieure (35b) et la partie inférieure (35c) de la première partie du capot (35).

6. Véhicule du type à selle selon la revendication 5, dans lequel l'ouverture respective (31, 41) du premier et/ou du deuxième capot latéral (30, 40) est formée dans la deuxième partie respective du capot (36) ou s'étend entre la première partie du capot (35) et la deuxième partie du capot respective (36).

7. Véhicule du type à selle selon l'une quelconque des revendications précédentes, dans lequel l'ouverture (31) du premier capot latéral (30) et/ou l'ouverture (41) du deuxième capot latéral (40) est plus petite que la première et/ou la deuxième ouverture respective (23, 24) de la boîte de rangement (20).

8. Véhicule du type à selle selon l'une quelconque des revendications précédentes, dans lequel la première ouverture (23) de la boîte de rangement (20) est entièrement exposée vers l'extérieur lorsque le premier capot latéral (30) est ouvert et en partie recouvert par le premier capot latéral (30 lorsque le premier capot latéral (30) est fermé, la partie de l'ouverture (23) de la boîte de rangement (20) chevauchant l'ouverture (31) dans le premier capot latéral (30) restant exposée vers l'extérieur lorsque le premier capot latéral (30) est fermé.

9. Véhicule du type à selle selon l'une quelconque des revendications précédentes, dans lequel au moins une partie arrière du premier et/ou du deuxième capot latéral (30, 40), et/ou un bord de l'ouverture (31, 41) du premier et/ou du deuxième capot latéral (30, 40) est courbé vers une ligne médiane du véhicule (CL), lors de son extension vers l'arrière.

10. Véhicule du type à selle selon l'une quelconque des revendications précédentes, dans lequel l'ouverture (31, 41) dans le premier et/ou le deuxième capot latéral (30, 40) a une dimension réduite dans une direction allant du haut vers le bas du véhicule lorsque l'ouverture (31, 41) dans le premier et/ou le deuxième capot latéral (30, 40) s'étend vers l'avant et/ou vers l'arrière d'une partie de l'ouverture (31, 41) dans le capot latéral (30, 40) ayant la dimension maximale dans la direction allant du haut vers le bas du véhicule.

11. Véhicule du type à selle selon la revendication 10, dans lequel la partie de l'ouverture (31, 41) dans le premier et/ou le deuxième capot latéral (30, 40) qui a la dimension maximale dans une direction allant du haut vers le bas du véhicule est disposée vers l'arrière de la position centrale de l'ouverture (31, 41) dans le capot latéral (30, 40), dans la direction allant de l'avant vers l'arrière du véhicule.

12. Véhicule du type à selle selon l'une quelconque des revendications précédentes, dans lequel le premier et/ou le deuxième capot latéral (30, 40) est monté ou peut être monté de manière articulée et/ou de manière pivotante, et le premier et/ou le deuxième capot latéral (30, 40) peut être ouvert/fermé en faisant pivoter le premier et/ou le deuxième capot latéral (30, 40), et/ou en déplaçant le premier et/ou le deuxième capot latéral (30, 40) autour d'un mécanisme d'articulation (32).
